# EUROPÄISCHE PATENTANMELDUNG

(11) **EP 1 462 207 A1**
(43) Veröffentlichungstag der Anmeldung: **29.09.2004**
(21) Anmeldenummer: 03007198.9
(22) Anmeldetag: 29.03.2003
(51) Int. Cl.: B23K 35/28, B23K 1/005, B23K 9/173, B23K 10/02

(54) **Verfahren zum Schutzgasschweissen oder Schutzgaslöten von Werkstücken gleicher oder verschiedener Metalle oder Metalllegierungen mit einem Zn/Al Zusatzmaterial**

(71) Anmelder: Grillo-Werke AG, D-47169 Duisburg (DE)
(72) Erfinder: Spriestersbach, Jochen Dr., 47058 Duisburg (DE); Wisniewski, Jürgen, 46487 Wesel (DE); Prenger, Frank Dr., 40885 Ratingen (DE)
(74) Vertreter: Sternagel, Fleischer, Godemeyer & Partner Patentanwälte

(57) **Zusammenfassung**

Gegenstand der Erfindung ist ein Verfahren zum Schutzgasschweißen oder Schutzgaslöten von Werkstücken (A) aus Stahl, Aluminium, Magnesium, Kupfer oder deren Legierungen mit Werkstücken (B) aus Stahl, Aluminium, Magnesium, Kupfer oder deren Legierungen, wobei die Werkstücke (A) und (B) aus gleichen oder verschiedenen Metallen oder Metallegierungen bestehen können unter Verwendung einer geschmolzenen Zusatzmetalllegierung, gekennzeichnet durch die folgenden Schritte:
a) Kontaktieren der zu verbindenden Werkstücke auf Stoß oder überlappend,
b) Aufschmelzen der Zusatzmetalllegierung enthaltend eine Zn/Al Legierung,
c) Aufbringen der geschmolzenen Zusatzmetalllegierung auf die Kontaktierungsstellen oder Teilbereiche der Kontaktierungsstellen der kontaktierten Werkstücke,
d) Abkühlen der verbundenen Werkstücke
wobei die Schritte b) und c) unmittelbar nacheinander durchgeführt werden und wobei mindestens die Schritte b) und c) unter Einsatz eines Schutzgases durchgeführt werden.

Ein weiterer Gegenstand ist ein Draht zur Anwendung in dem Verfahren.

## Beschreibung

Gegenstand der Erfindung ist ein Verfahren zum Schutzgasschweißen oder Schutzgaslöten von Werkstücken gleicher oder verschiedener Metalle oder Metalllegierungen unter Verwendung einer Zn-Basis-Zusatzmetalllegierung. Es werden Werkstücke aus Stahl, Magnesium, Aluminium, Kupfer und deren Legierungen verschweißt oder verlötet, wobei die zu verbindenden Werkstücke aus gleichen oder ungleichen Metallen oder Metalllegierungen bestehen können. Ein weiterer Gegenstand der Erfindung ist ein Draht, der in diesen Verfahren verwendet wird.

Im Fahrzeugbau und insbesondere im Automobilbau ist es üblich geworden, beim Karosseriebau eine Vielzahl von Leichtmetallteilen zu verwenden, um so das Gesamtgewicht der Karosserie zu verringern, was sich auf den Gesamtkraftstoffverbrauch positiv auswirkt. In diesem Zusammenhang werden häufig Teile aus Aluminium, Aluminiumlegierungen oder Magnesiumlegierungen eingesetzt. Inzwischen sind sogar Fahrzeuge auf dem Markt, deren Karosserien zu weit mehr als der Hälfte aus diesen Materialien bestehen.

Mit der Änderung der für den Karosseriebau verwendeten Materialien ist auch eine entsprechende Anpassung der Fügeverfahren des Standes der Technik notwendig geworden. Während früher im Karosseriebau im wesentlichen Stahlbleche verbunden werden mussten, müssen jetzt auch Fügeverbindungen zwischen verschiedenen Materialien so zur Verfügung gestellt werden, dass sie in einem industriellen Fertigungsverfahren ohne größere Komplikationen eingesetzt werden können.

Für das Fügen von Stahlblechen wie beispielsweise den häufig im Karosseriebau verwendeten verzinkten Feinblechen, werden im Stand der Technik u.a. das Schutzgasschweißen bzw. das Schutzgaslöten eingesetzt. Derartige Verfahren werden in der DIN1910-2 beschrieben.

Beim Metall-Schutzgasschweißen handelt es sich um ein Verfahren, bei dem mittels eines Lichtbogens, der zwischen einer von Schutzgas umströmten Drahtelektrode und dem Werkstück brennt, das Werkstück im zu verschweißenden Bereich aufgeschmolzen wird. Dabei kann die Drahtelektrode Schweißzusatzstoffe enthalten und muss auf den zu verschweißenden Werkstoff abgestimmt werden. Die zu verschweißenden Bereiche der Werkstücke werden so miteinander verbunden.

Mit diesen Verfahren werden Stähle wie auch Nicht-Eisen-Metalle miteinander verschweißt.

Ein hierzu alternatives Verfahren ist das Metall-Schutzgaslöten, das sich vom Metall-Schutzgasschweißen nur dadurch unterscheidet, dass als Drahtelektrode ein niedriger als die zu verbindenden Grundwerkstoffe schmelzendes Lot eingesetzt wird, so dass der gesamte Vorgang bei niedrigeren Temperaturen durchgeführt werden kann.

Dieses auch als "MSG-Löten" bezeichnete Verfahren hat sich insbesondere zum Verbinden von verzinkten Feinblechen in der Automobilindustrie durchgesetzt. Im Vergleich zu dem entsprechenden Schweißverfahren bietet es den Vorteil höherer Prozesssicherheit, besserer Qualität der Lötnähte und sehr guter Verbindungsfestigkeit sowie sehr guter Korrosionsbeständigkeit der verbundenen Metallteile. Als Schweißschutzgas kann für dieses Verfahren Argon oder ein Argon-haltiges Gas eingesetzt werden. Diese Gasgemische enthalten aktive Gase, die glattere Lötnähte und gute Nahtübergänge zum Grundwerkstoff erzeugen können. Hierzu wird beispielsweise ein Gemisch von Argon mit geringen Sauerstoff Anteilen verwendet.

Als Lot werden Hart- bzw. Hochtemperaturlote wie beispielsweise Kupferbasisdrähte eingesetzt. Diese bestehen im wesentlichen aus Kupfer mit unterschiedlichen Legierungselementen wie Silizium, Aluminium, Zinn, Nickel, Zink und Mangan. Der Schmelzpunkt der Lote beträgt etwa 950 bis 1400°C und in diesem Bereich wird auch das entsprechende Verlöten vorgenommen. Gegenüber dem Schweißverfahren besitzt das Lötverfahren weiterhin den Vorteil, dass die thermische Belastung der Bauteile erheblich geringer ist und die Zinkschicht des verzinkten Feinbleches durch die Schweißtemperaturen nicht so stark verändert wird, dass die Korrosionsbeständigkeit leidet.

Die nachfolgende Erfindung soll eine Verbesserung des Schweißverfahrens bzw. Lötverfahrens Verfahrens zur Verfügung stellen, um auch das Verbinden von Werkstoffen untereinander und aus unterschiedlichen Metallen und Metalllegierungen, insbesondere aus Stahl, Aluminium, Magnesium, Kupfer oder deren Legierungen zu ermöglichen. Bisher ist die Verbindung dieser Werkstoffe mit Hilfe des Schutzgasschweißens oder Schutzgaslötens mit Zink-Basis-Loten nicht beschrieben worden.

Aus dem Stand der Technik sind aber andere Verfahrens zum Verbinden von Stahl mit Aluminium bekannt. So beschreibt die DE 100 57 180 A1 ein Verfahren zur Verbindung von Stahlrohren mit Aluminiumrippen. Dabei wird als Lötmittel eine Zink-Aluminium-Legierung mit einem Aluminiumanteil von 0,5 bis 20 Gew.-% verwendet. Das Fügeverfahren erfolgt so, dass zunächst die Lötmittelschicht mit Hilfe eines Flammspritzverfahrens oder eines Lichtbogenverfahrens auf die Stahlrohre oder die Aluminiumrippen aufgebracht wird. Erst danach werden die Aluminiumrippen mit den Stahlrohren kontaktiert und bei Raumtemperatur ein Flussmittel in Form von Cäsium-Aluminium-Tetrafluorid aufgebracht. Danach werden die mit den Aluminiumrippen versehenen Stahlrohre in einem Ofen bei einer Löttemperatur zwischen 370 und 470°C verlötet. Bei diesem Verfahren handelt es sich um ein Verfahren mit zwei Prozessschritten. Im ersten Schritt wird das Lot auf die einzelnen Teile aufgebracht. Das Lot erkaltet dann. In einem zweiten Verfahrensschritt werden die Teile dann kontaktiert, das Flussmittel wird bei Raumtemperatur aufgebracht und in einem Ofen werden die Teile verlötet. Es liegt auf der Hand, dass ein solches Verfahren insbesondere im Karosseriebau in Form eines industriellen kontinuierlichen Verfahrens nicht durchführbar ist.

Die technische Aufgabe der Erfindung ist es daher, das aus dem Stand der Technik bekannte Schutzgasschweißverfahren bzw. Schutzgaslötverfahren so zu modifizieren, dass es neben dem Verbinden gleicher Metalle auch für das Verbinden verschiedener Metalle geeignet ist, insbesondere von Stahl, Aluminium, Magnesium, Kupfer oder deren Legierungen.

Diese technische Aufgabe wird gelöst durch Verfahren zum Schutzgasschweißen oder Schutzgaslöten von Werkstücken (A) aus Stahl, Aluminium, Magnesium, Kupfer oder deren Legierungen mit Werkstücken (B) aus Stahl, Aluminium, Magnesium, Kupfer oder deren Legierungen, wobei die Werkstücke (A) und (B) aus gleichen oder verschiedenen Metallen oder Metalllegierungen bestehen können unter Verwendung einer geschmolzenen Zusatzmetalllegierung, gekennzeichnet durch die folgenden Schritte: ein Verfahren zum Verbinden von Werkstücken aus Stahl mit Werkstücken aus anderen metallischen Werkstoffen unter Verwendung einer Zusatzmetalllegierung gekennzeichnet durch die folgenden Schritte:
a. Kontaktieren der zu verbindenden Werkstücke auf Stoß oder überlappend,
b. Aufschmelzen der Zusatzmetalllegierung enthaltend eine Zn/Al Legierung,
c. Aufbringen der geschmolzenen Zusatzmetalllegierung auf die Kontaktierungsstellen oder Teilbereiche der Kontaktierungsstellen der kontaktierten Werkstücke,
d. Abkühlen der verbundenen Werkstücke,
wobei die Schritte b und c untermittelbar nacheinander durchgeführt werden und wobei mindestens die Schritte b und c unter Einsatz eines Schutzgases durchgeführt werden.

Als Schutzgas im Sinne der Erfindung werden solche Gase oder Gasgemische angesehen, die während des Verfahrens keinerlei Reaktion mit der Zusatzmetalllegierung oder mit dem Material der Werkstücke eingehen. In bevorzugter Weise werden hierzu Edelgase verwendet, insbesondere Argon. Zum anderen können aber auch Gasgemische aus Schutzgasen mit aktiven Gasen eingesetzt werden, die den Prozess bzw. die Legierungsbildung beeinflussen. Hierzu gehören beispielsweise Gasgemische aus Argon und geringen Anteilen Sauerstoff oder Kohlendioxid.

Durch den Einsatz der Zink-Basis-Legierungen als Zusatzmetalllegierung und dem Einsatz eines Schutzgases ist es möglich, Werkstücke aus unterschiedlichen metallischen Werkstoffen in einem Ein-Schritt-Prozess, der auch kontinuierlich und automatisiert durchgeführt werden kann, miteinander zu verbinden. Aufgrund der niedrigeren Schmelztemperatur der Zink-Basis-Legierung, die im Bereich von 350 bis 450°C liegt, ist es möglich, das gesamte Verfahren bei niedrigeren Temperaturen durchzuführen als bisherige Schutzgaslötverfahren, die bei etwa 1000°C durchgeführt wurden. Hierdurch erfolgt ein erheblich geringerer Verzug der Bauteile, da bei insgesamt niedrigerer Temperatur gearbeitet werden kann. Dadurch wird es insbesondere auch möglich sehr dünne Materialien, wie Bänder oder Bleche von einer Dicke kleiner 1 mm zu verbinden. Die niedrigere Temperatur spart weiterhin auch erhebliche Energiekosten für den Lötvorgang. Ein weiterer Vorteil ist, dass die Stahlteile, sofern sie als verzinkte Stahlbleche eingesetzt werden, aufgrund der niedrigeren Temperatur in ihrer Verzinkung nicht beschädigt werden, der Korrosionsschutz im Bereich der Schweißnaht bzw. Lötnaht erhalten bleibt und somit aufwendige Nacharbeiten zum Erhalt des Korrosionsschutzes entfallen.

Zink besitzt einen Schmelzpunkt von 419°C und einen Siedepunkt von 908°C. Dies bedeutet, dass bei Löttemperaturen im Bereich von 1000°C ein größerer Anteil der Verzinkung des Stahlbleches verdampft. Dies stört zum einen den Fügeprozess und die Festigkeit der Fügeverbindung und führt zum anderen zu einer Verminderung des Korrosionsbeständigkeit des Stahlblechs, die ja durch die Verzinkung erreicht werden soll und während des Fügeprozesses zerstört wird. Durch das erfindungsgemäße Verfahren erfolgt das Fügen bei erheblich niedrigeren Temperaturen, so dass dieses Problem nicht auftreten kann.

Es wurde weiterhin festgestellt, dass die so hergestellte Lötverbindung sehr fest ist und gute Korrosionsbeständigkeit aufweist.

In einer bevorzugten Ausführungsform werden für das Verfahren Werkstücke aus Stahl eingesetzt, die aus verzinktem oder unverzinktem Stahl bestehen. Häufig werden heutzutage im Fahrzeugbau dünne und verzinkte Feinbleche eingesetzt, mit der die Lebensdauer der Fahrzeuge verlängert werden soll. Heute beträgt der durchschnittliche Anteil dieser Bleche im Karosseriebau über 70 %. Als Folge davon, geben die meisten Kraftfahrzeughersteller mittlerweile Garantiezeiten von bis zu 12 Jahren gegen Durchrostung.

In einer bevorzugten Ausführungsform bestehen die metallischen Werkstoffe aus Stahl, Aluminium, Aluminiumlegierungen, Magnesium, Magnesiumlegierungen, Kupfer und Kupferlegierungen. Insbesondere bevorzugt sind Aluminium und Aluminiumlegierungen und Aluminium-Magnesium-Legierungen, die heutzutage häufig im Kraftfahrzeugbau verwendet werden. Sie besitzen gute mechanische Eigenschaften und führen aufgrund ihres geringen spezifischen Gewichtes zu einer Verringerung des Karosseriegesamtgewichtes und damit zu einer Verringerung des Kraftstoffverbrauches. In einer besonders bevorzugten Ausführungsform sollen Werkstoffe aus Stahl, insbesondere verzinktem Stahl mit Werkstoffen aus Aluminium, Aluminiumlegierungen, Magnesium, Magnesiumlegierungen verbunden werden. In bevorzugter Weise wird hierzu eine Zink-Basis-Legierung mit Aluminium eingesetzt.

In einer besonders bevorzugten Ausführungsform erfolgt das Verbinden der Werkstücke mittels des Schutzgasschweiß/-lötverfahrens.

Bei diesem Verfahren handelt es sich um ein Verfahren bei dem ein Lot mittels eines Lichtbogens oder Plasmas oder Lasers geschmolzen wird und das flüssige Lot auf die zu verschweißende/zu verlötende Stellen aufgebracht wird. Entsprechende Verfahren sind als Lichtbogenschweißverfahren, Plasmaschweißverfahren oder WIG-Schweißverfahren bekannt, wobei im Falle des erfindungsgemäßen Verfahrens die Besonderheit besteht, dass diese Verfahren unter Verwendung eines Zink-Basis-Lotes durchgeführt werden.

Das Lichtbogenschweiß/-lötverfahren ist besonders bevorzugt. Der Lichtbogen brennt dabei zwischen einer Drahtelektrode und dem Werkstück. Die Drahtelektrode ist umgeben von einer Schutzgasdüse, aus der Schutzgas auf die zu verbindende Stelle geleitet wird. Die Drahtelektrode besteht aus der Zusatzmetalllegierung und ist damit das Lot, mit dem das Werkstück verbunden wird. Dieses Verfahren ermöglicht das kontinuierliche Verbinden von Metallmaterialien in einem einschrittigen Durchlaufverfahren. Das Aufschmelzen der Zusatzmetalllegierung erfolgt vorzugsweise durch den elektrischen Lichtbogen, der zwischen der Drahtelektrode und dem Werkstück brennt. Bei dem erfindungsgemäßen Verfahren wird im Falle des Verbindens von Stahl mit Leichtmetallen wie Aluminium oder Magnesium und deren Legierungen die Leichtmetalle teilweise angeschmolzen. Weiterhin wird ein Lot verwendet, so dass es sich um ein kombiniertes Schweiß-Lötverfahren handelt.

Das erfindungsgemäße Verfahren kann mit oder ohne Flussmittel durchgeführt werden. Der Einsatz eines Flussmittels erfolgt üblicherweise, um beim Löten das Schmelzen des Lotes zu erleichtern, die Abscheidung einzelner Stoffe zu fördern bzw. die Oxidation zu verhindern. Insbesondere bei Aluminium wird in der Regel ein Flussmittel verwendet, um die hinderliche Oxidschicht zu entfernen. Der Einsatz von Flussmitteln hat aber den Nachteil, dass die meisten Flussmittel sehr aggressiv sind und das Aluminium nach dem Verbinden mit anderen Metallen zur Korrosion bringt. Es sind daher zusätzliche Schritte notwendig, um die Flussmittel nach dem thermischen Verbinden wieder zu beseitigen. Überraschenderweise hat sich gezeigt, dass das erfindungsgemäße Verfahren vollständig ohne Flussmittel durchgeführt werden kann, und dass trotzdem feste und haltbare Verbindungen zwischen den zu verbindenden Wertstoffen erzeugt werden können. Dies ist umso erstaunlicher, als dass gerade beim Verbinden von verschiedenen Metallen, beispielsweise aus Stahl-, Aluminium- oder Magnesiumlegierungen, äußerst spröde intermetallische Phasen entstehen können, die zu einer mangelnden Festigkeit der Verbindung führen. Offensichtlich wird die Bildung dieser intermetallischen Phasen gerade durch die erheblich geringere Temperatur, die für das erfindungsgemäße Verfahren notwendig ist, vermieden und hierdurch eine festere Verbindung erhalten.

In bevorzugter Weise werden als Zusatzmetalllegierungen solche Zink-Basis-Legierungen verwendet, die neben den üblichen Verunreinigungen 1 bis 25 Gew.-% Aluminium enthalten. Besonders bevorzugt sind Zinklegierungen, die 5 bis 15 Gew.-% Aluminium enthalten, ganz besonders bevorzugt sind solche, die 4 Gew.-% Aluminium enthalten. Im einzelnen können die folgenden Zinklegierungen eingesetzt werden: ZnAl5, ZnAl15, ZnAl2, ZnAl20, Zn Al22 und ZnAl4.

Diese Zink-Basis-Legierung kann neben den üblichen Verunreinigungen weiterhin einen oder mehrere Legierungszusätze enthalten, insbesondere bis 500 ppm Mg, bis 500 ppm Cr, bis 2000 ppm Mn, bis 300 ppm Li, bis 4 % Cu, bis 50 ppm B, bis 500 ppm Ti, bis 1000 ppm Si.

Die Zusatzmetalllegierung wird für das erfindungsgemäße Verfahren in Form eines Massiv- oder Fülldrahtes eingesetzt. Falls ein Fülldraht verwendet wird, kann die Seele dieses Fülldrahtes entsprechende Zusatzstoffe, die für das Verlöten notwendig sind, enthalten. Zusatzstoffe können beispielsweise Flussmittel (z.B. auf Cs-Basis), Metallpulver ausgewählt aus der Gruppe umfassend Aluminium, Chrom, Titan, Mangan und Nickel sein.

Das erfindungsgemäße Verfahren wird in bevorzugter Weise so durchgeführt, dass die von Schutzgas umströmte Drahtelektrode aus der Zink-Basis-Legierung im Lichtbogen, Plasma oder Laser aufgeschmolzen wird und die aufgeschmolzene Zusatzmetalllegierung auf die kontaktierten Werkstücke an den entsprechenden Kontaktierungsstellen oder Teilbereichen der Kontaktierungsstellen aufgebracht wird. Dies erfolgt unmittelbar nach dem Aufschmelzen der Zusatzmetalllegierung.

Ein weiterer Gegenstand der Erfindung ist Draht eines Durchmessers von 0,8 bis 3,2 mm zur Anwendung in einem Verfahren zum Schutzgasschweißen oder Schutzgaslöten von Werkstücken A aus Stahl, Aluminium, Magnesium, Kupfer oder deren Legierungen mit Werkstücken B aus Stahl, Aluminium, Magnesium, Kupfer oder deren Legierungen, wobei die Werkstücke A und B aus gleichen oder verschiedenen Metallen oder Metalllegierungen bestehen können unter Verwendung einer geschmolzenen Zusatzmetalllegierung bestehend aus einer Zink-Basis-Legierung mit einem Al-Anteil von 1 bis 25 Gew.-%

In einer weiteren bevorzugten Ausführungsform kann die Zink-Aluminium-Legierung einzeln oder in Kombination einen oder mehrere der nachfolgenden Legierungszusätze enthalten: bis 500 ppm Mg, bis 500 ppm Cr, bis 2000 ppm Mn, bis 300 ppm Li, bis 4 % Cu, bis 50 ppm B, bis 500 ppm Ti, bis 1000 ppm Si. Bei dem Draht kann es sich in bevorzugter Weise um einen Massivdraht oder einen Fülldraht handeln.

Die nachfolgenden Beispiele sollen die Erfindung näher darstellen.

### Beispiele

Es wurden Versuche zur Herstellung von Lötverbindungen von verzinkten Stahlteilen untereinander und von verzinkten Stahlteilen mit Aluminiumteilen mittels Schutzgasschweißen und Zink-Aluminium-Loten durchgeführt. Es wurden hierbei Schweißanlagen unterschiedlicher Hersteller eingesetzt.

Als Grundwerkstoff wurde verzinkte Stahlteile einer Dicke von 0,7 bis 2 mm und Aluminiumteile einer Dicke von 0,8 bis 2,5 mm eingesetzt. Als Lotwerkstoff wurde ein ZnAl4-Lotdraht eines Durchmessers von 1,6 mm als Massivdraht eingesetzt. Als Schutzgas wurde Argon verwendet. Es wurden Überlappungsverbindungen und Stumpfstoßverbindungen zwischen den Stahlteilen untereinander und zwischen den Stahlteilen und den Aluminiumteilen hergestellt.

Der Anstellwinkel betrug 45 bis 80° und die Neigung des Brenners (elektrischer Lichtbogen beim Brenner) betrug 60 bis 90°. Der Brennerabstand zu den zu verbindenden Werkstücken betrug 10 bis 25 mm an der Schutzgasdüse und die Verfahrgeschwindigkeit beim Verlöten betrug 0,3 bis 1,3 m/min.

Es wurde festgestellt, dass sich mit diesen Parametern reproduzierbar Verbindungen zwischen Stahlteilen untereinander und Stahlteilen mit Aluminiumteilen mit einer gleichmäßigen Schweiß-/Lötnahtausbildung erzeugen lassen. Die anschließende Untersuchung der mechanisch-technologischen Eigenschaften zeigte, dass bei durchgelöteten Proben der Bruch beim Zugversuch im Werkstoff Aluminium (Rₘ≥205 MPa) außerhalb der Wärmeeinflusszone liegt.

Dies zeigt, dass mit dem erfindungsgemäßen Verfahren zum Beispiel feste und korrosionsbeständige Verbindungen von Werkstoffen aus Stahl mit Werkstoffen aus Aluminium erzeugt werden können.

## Patentansprüche

1. Verfahren zum Schutzgasschweißen oder Schutzgaslöten von Werkstücken (A) aus Stahl, Aluminium, Magnesium, Kupfer oder deren Legierungen mit Werkstücken (B) aus Stahl, Aluminium, Magnesium, Kupfer oder deren Legierungen, wobei die Werkstücke (A) und (B) aus gleichen oder verschiedenen Metallen oder Metalllegierungen bestehen können unter Verwendung einer geschmolzenen Zusatzmetalllegierung, **gekennzeichnet durch** die folgenden Schritte:
a) Kontaktieren der zu verbindenden Werkstücke auf Stoß oder überlappend,
b) Aufschmelzen der Zusatzmetalllegierung enthaltend eine Zn-Basis-Legierung,
c) Aufbringen der geschmolzenen Zusatzmetalllegierung auf die Kontaktierungsstellen oder Teilbereiche der Kontaktierungsstellen der kontaktierten Werkstücke,
d) Abkühlen der verbundenen Werkstücke
wobei die Schritte b) und c) unmittelbar nacheinander durchgeführt werden und wobei mindestens die Schritte b) und c) unter Einsatz eines Schutzgases durchgeführt werden.

2. Verfahren nach Anspruch 1, **dadurch gekennzeichnet, dass** die Werkstücke aus Stahl aus verzinktem oder unverzinktem Stahl bestehen.

3. Verfahren nach einem oder mehreren der Ansprüche 1 oder 2, **dadurch gekennzeichnet, dass** das Aufschmelzen der Zusatzmetalllegierung im elektrischen Lichtbogen oder mittels Plasmaverfahrens oder mittels Laser erfolgt.

4. Verfahren nach einem oder mehreren der Ansprüche 1 bis 3, **dadurch gekennzeichnet, dass** das Verbinden der Werkstücke mit oder ohne Einsatz eines Flussmittels erfolgt.

5. Verfahren nach einem oder mehreren der Ansprüche 1 bis 5, **dadurch gekennzeichnet, dass** die Zn-Basis-Legierung 1 bis 25 Gew.-% Al enthält.

6. Verfahren nach Anspruch 5, **dadurch gekennzeichnet, dass** die Zn/Al Legierung einzeln oder in Kombination eine oder mehrere der nachfolgenden Legierungszusätze enthalten kann: bis 500 ppm Mg, bis 500 ppm Cr, bis 2000 ppm Mn, bis 300 ppm Li, bis 4 % Cu, bis 50 ppm B, bis 500 ppm Ti, bis 1000 ppm Si.

7. Verfahren nach einem oder mehreren der Ansprüche 1 bis 6, **dadurch gekennzeichnet, dass** das Verbinden der Werkstücke mit Zusatzmetalllegierungen erfolgt, deren Schmelztemperaturen im Bereich von 370 bis 600 °C liegen.

8. Verfahren nach einem oder mehreren der Ansprüche 1 bis 7, **dadurch gekennzeichnet, dass** die Zusatzmetalllegierung in Form eines Massiv- oder Fülldrahtes eingesetzt wird.

9. Draht eines Durchmessers von 0,8 bis 3,2 mm zur Anwendung in einem Verfahren zum Schutzgasschweißen oder Schutzgaslöten von Werkstücken A aus Stahl, Aluminium, Magnesium, Kupfer oder deren Legierungen mit Werkstücken B aus Stahl, Aluminium, Magnesium, Kupfer oder deren Legierungen, wobei die Werkstücke A und B aus gleichen oder verschiedenen Metallen oder Metalllegierungen bestehen können unter Verwendung einer geschmolzenen Zusatzmetalllegierung bestehend aus einer Zink-Basis-Legierung mit einem Al-Anteil von 1 bis 25 Gew.-%

10. Draht nach Anspruch 9, **dadurch gekennzeichnet, dass** die Zn/Al Legierung einzeln oder in Kombination eine oder mehrere der nachfolgenden Legierungszusätze enthalten kann: bis 500 ppm Mg, bis 500 ppm Cr, bis 2000 ppm Mn, bis 300 ppm Li, bis 4 % Cu, bis 50 ppm B, bis 500 ppm Ti, bis 1000 ppm Si.

11. Draht nach Anspruch 9 oder 10, **dadurch gekennzeichnet, dass** es ein Massivdraht oder ein Fülldraht ist.
